# EUROPÄISCHE PATENTSCHRIFT

(11) **EP 2 143 673 B1**
(45) Veröffentlichungstag und Bekanntmachung des Hinweises auf die Patenterteilung: **04.03.2015**
(21) Anmeldenummer: 09161269.7
(22) Anmeldetag: 27.05.2009
(51) Int. Cl.: B65G 47/31, B65G 47/08, B65B 35/44, B65B 57/16, B65G 47/68, B65G 47/71

(54) **Transportvorrichtung zum Zuführen von Artikeln zu einer Verpackungsmaschine**
Transport device for feeding articles into a packaging machine
Dispositif de transport destiné à transporter des articles vers une machine d'emballage

(30) Priorität: 08.07.2008 DE 202008009166 U
(43) Veröffentlichungstag der Anmeldung: 13.01.2010
(73) Patentinhaber: Krones AG, 93073 Neutraubling (DE)
(72) Erfinder: Schmid, Bernhard, 83115, Neubeuern (DE)
(74) Vertreter: Reichert & Lindner Partnerschaft Patentanwälte

(56) Entgegenhaltungen:
- EP-A1- 1 184 310
- DE-A1- 2 745 640
- DE-A1-102006 039 086
- DE-U1-202005 013 125
- US-A1- 2006 021 852
- US-B1- 6 776 278

## Beschreibung

Die vorliegende Erfindung betrifft eine Vorrichtung zum Zuführen von Artikeln zu einer Verpackungsmaschine. Dabei umfasst die Vorrichtung im Besonderen ein Dosierband und ein zwischen dem Dosierband und der Verpackungsmaschine angeordnetes Transportband. Das Transportband besteht aus mindestens zwei einzelnen Bändern, die durch Trennwände voneinander getrennt sind und somit Gassen für den Transport der Artikel bilden.

Eine häufige Anwendung derartiger Vorrichtungen ist die gleichmäßige Verteilung angeförderter Produkte oder Artikel auf einzelne Gassen eines mehrspurigen Transportbandes. Das Transportband selbst bildet den Einlauf zu einer Verpackungsmaschine oder einer Maschine zum Zusammenstellen von Gebinden. So kann es dazu kommen, dass in den einzelnen Gassen des Transportbandes die zu transportierenden Artikel nicht gleich verteilt sind. Um eine Gleichverteilung zu erreichen, werden den einzelnen Bändern des Transportbandes jeweils individuelle Antriebsmotore zugeordnet. Somit ist es mittels einer Geschwindigkeitssteuerung möglich, die einzelnen Bänder des Transportbandes unterschiedlich anzutreiben, so dass eine Gleichverteilung der Artikel in den Gassen erreicht werden kann.

Die Deutsche Patentschrift DE 3840647 offenbart eine Vorrichtung zum Weiterfördern von Druckprodukten. Die Bandfördervorrichtung fördert die Produkte von einer ersten Längsfördereinrichtung zu zwei, in Abstand voneinander angeordneten Längsfördereinrichtungen. Der Abstand zwischen den Fördereinrichtungen wird durch zwei separat schwenkbare Gruppen aus je vier Förderorganen überbrückt. Jedes Förderorgan ist jeweils um eine an ihrem hinteren Ende angebrachte senkrechte Welle schwenkbar gelagert. Diese Wellen dienen gleichzeitig dem Antrieb der Förderbänder, wobei hierzu ein gemeinsames Antriebsorgan in Form einer endlosen Kette vorgesehen ist. Die Förderorgane weisen einen großen Schwenkbereich auf und ermöglichen die Förderung von Produkten unterschiedlicher Formate.

Die deutsche Patentschrift DE 10 2006 039 086.5 offenbart ein Dosierband. Das Dosierband besteht aus mehreren Transportbändern, von denen jedes eine geschlossene Schlaufe bildet, sowie endlos umlaufend antreibbar ist. Die Schlaufen sind derart angeordnet, dass sie mit den oberen Längen der Schlaufen seitlich aneinander anschließen und eine gemeinsame horizontale, oder im wesentlichen horizontale Transportfläche bilden. Um eine gleichmäßige Verteilung der Produkte in den einzelnen Spuren oder Gassen eines an das Dosierband anschließendes Transportband zu erreichen, ist bei den Bändern des Dosierbandes ein Antrieb mit einem einzigen Antriebsmotor vorgesehen. Die Transportbänder sind antriebsmäßig mit einem den Antriebsmotor verbindenden Getriebe verbunden, welches als Schaltgetriebe derart ausgebildet ist, dass die Geschwindigkeit wenigstens eines Transportbandes durch Schalten des Getriebes stufenförmig veränderbar ist. Die einzelnen Bänder des Transportbandes, welches dem Dosierband nachgeschaltet ist, werden mit einem einzigen Motor angetrieben, der allen Transportbändern die gleiche Geschwindigkeit verleiht.

Die deutsche Offenlegungsschrift DE 10 2006 039 086 A1 offenbart ein Dosierband zur Verwendung in einer Transportstrecke zum Transportieren von Produkten, Wenigstens zwei durch einen Antrieb antreibbare, endlos umlaufende Transportbänder besitzen eine gemeinsame horizontale oder im Wesentlichen horizontale Transportfläche für die Produkte. Die Umlaufgeschwindigkeit und damit die Transportgeschwindigkeit der Transportbänder ist individuell einstellbar.

Die deutsche Patentschrift DE 4213557 B4 offenbart eine Vorrichtung zum Umformen einer aufrechtstehend, auf einem Auslaufförderband einspurig aus dem Auslaufstern einer Gefäßbehandlungsmaschine auslaufenden Gefäßreihe in einem mehrreihigen, nahezu lückenlosen Gefäßstrom mit geringer Geschwindigkeit. Die einspurige Gefäßreihe wird durch ein Führungsmittel vom Auslaufförderband auf ein sich daran anschließendes, mit geringer Geschwindigkeit laufendes Förderband, das aus mehreren Förderabschnitten besteht, übergeleitet. Dabei ist zumindest der auf das Auslaufförderband folgende erste Förderabschnitt parallel zum Auslaufförderband. Das Führungsmittel erstreckt sich von dem Auslaufstern bis auf die Förderabschnitte, wobei die Förderabschnitte stufenweise mit abnehmender Geschwindigkeit angetrieben werden.

Die deutsche Gebrauchsmusterschrift DE 20 2005 013 125 U1 offenbart eine gattungsgemässe Vorrichtung zum Umformen eines Behälterstroms. Dabei wird der mehrspurige Behälterstrom in mehrere einspurige Behälterreihen umgeformt. Die Vorrichtung umfasst einen Zuförderer für den Behälterstrom, mehrere Abförderer für die Behälterreihen, einen sich an den Zuförderer anschließenden Zwischenbereich, der mehrere durch parallele Führungsgeländer abgeteilte Gassen mit jeweils zwei Spuren aufweist. Ferner ist ein dem Zwischenbereich mit den Abförderern verbindender Vereinzelungsbereich vorgesehen, der mehrere, durch schräge Führungsgeländer abgeteilte Gassen aufweist. Die schrägen Führungsgeländer verengen sich dabei von zwei auf eine Spur. Die Gasse des Zwischenbereichs weist einen separaten Transporteur auf, der mit einem variablen Antrieb versehen ist. Der variable Antrieb ist dabei über einen Behälterfühler steuerbar, der an der zugehörigen Gasse des Zwischenbereichs und/oder des Vereinzelungsbereichs angeordnet ist.

Aufgabe der Erfindung ist, eine Vorrichtung zum Zuführen von Artikeln zu einer Verpackungsmaschine zu schaffen, bei der Lücken im Gassentransport in die Verpackungsmaschine vermieden werden und wobei eine optimale Staudruckregelung in den einzelnen Gassen möglich ist.

Diese Aufgabe wird gelöst durch eine Vorrichtung, die die Merkmale des Anspruchs 1 umfasst.

Es hat sich als Vorteil erwiesen, wenn dem Transportband, welches dem Dosierband nachgeschaltet ist, ein einziger Antriebsmotor zugeordnet ist. Der Antriebsmotor ist mit einer Schalteinrichtung verbunden, mit der die einzelnen Bänder des Transportbandes mit unterschiedlichen Geschwindigkeiten beaufschlagbar sind. Dem Dosierband ist ebenfalls ein einziger Antriebsmotor zugeordnet, der das gesamte Dosierband mit einer einheitlichen Geschwindigkeit antreibt. Bei einer Ausführungsform kann die Schalteirichtung als Getriebe ausgestaltet sein, über das die einzelnen Bänder des Transportbandes bei Bedarf mit verschiedenen Geschwindigkeiten betreibbar sind. Bei anderen Ausführungsform ist die Schalteirichtung als ein Kupplungssystem ausgestaltet, über das die einzelnen Bänder des Transportbandes bei Bedarf mit unterschiedlichen Wellen des Antriebsmotors verbindbar sind.

Dem Dosierband ist ein weiteres Transportband vorgeordnet, das dem Dosierband die Artikel im Massenstrom zuführt. Das weitere Transportband ist ebenfalls über einen einzigen Antriebsmotor antreibbar. Der Massenstrom aus Artikeln auf dem weiteren Transportband und zumindest auf einem ersten Teilabschnitt des Dosierbandes weist eine Kugelpackung auf. Der Begriff der Kugelpackung ist dahingehend zu verstehen, dass die einzelnen Artikel, welche im Massenstrom transportiert werden, entsprechend dem Hexagonal-Closepack auf dem dem Dosierband vorgeordneten Transportband, bzw. auf dem zumindest ersten Teilabschnitt des Dosierbandes angeordnet sind.

Zum Aufbrechen des Massenstroms, welcher durch das dem Dosierband vorgeordneten Transportbandes angeliefert wird, sind auf einem zweiten Teilabschnitt des Dosierbandes mehrere Separierelemente vorgesehen. Dabei sind die Separierelemente derart angeordnet, dass der Massenstrom der Artikel in einzelne Gruppen von Artikeln aufgespalten wird.

An einem Ende des Dosierbandes, welches dem nachgeordneten Transportband gegenüberliegt, sind ebenfalls mehrere Trennwände vorgesehen. Durch diese Trennwände bilden sich mehrere Gassenabschnitte auf dem Endbereich des Dosierbandes aus. Diese Gassenabschnitte des Dosierbandes fluchten mit den Gassen des Transportbandes. In den Gassenabschnitten liegen die Artikel vereinzelt vor.

Jedem einzelnen Band des Transportbandes ist eine Kupplung des Getriebes zugeordnet. Durch das Zuschalten der jeweiligen Kupplung ist individuell die Geschwindigkeit eines jeden einzelnen Bandes des Transportbandes veränderbar.

Dem Transportband, welches die Gassen ausgebildet hat, in denen die Artikel vereinzelt transportierbar sind, ist ebenfalls ein Transportband der Verpackungsmaschine nachgeordnet. Dieses Transportband hat ebenfalls mehrere Gassen ausgebildet, die mit den Gassen des vorgeordneten Transportbandes fluchten. Das Transportband der Verpackungsmaschine ist mit einem Antriebsmotor versehen, mit dem das Transportband der Verpackungsmaschine mit einer konstanten Geschwindigkeit bewegbar ist.

An einem Übergang vom Transportband zum Transportband der Verpackungsmaschine ist mindestens eine Detektoreinrichtung vorgesehen. Mit der Detektoreinrichtung ist ein Abstandsschwellwert der einzelnen in den Gassen des Transportbandes transportierten Artikel bestimmbar. Der Abstandsschwellwert ist am Übergang zwischen dem Transportband und dem Transportband in der Verpackungsmaschine bestimmbar. Nach Ermittlung der Überschreitung einer bestimmten Grenze des Abstandsschwellwerts ist die Kupplung demjenigen Band des Transportbandes zuschaltbar, damit dieses schneller bewegbar ist. Dasjenige Band des Transportbandes, bei dem die Kupplung zugeschaltet ist, bewegt sich schneller, als das entsprechende Band des Transportbandes der Verpackungsmaschine. Dadurch wird erreicht, dass sich der Abstand zwischen den Artikeln letztendlich in der Verpackungsmaschine verringert. Somit ist es möglich, dass derjenige Abstand zwischen den Artikeln eingestellt wird, der für die nachfolgende in der Verpackungsmaschine vorgesehene Verpackung der einzelnen Artikel, bzw. Artikelgruppen, vorgesehen ist.

Die Detektionseinrichtung umfasst mehrere Lichttaster, die entsprechend den einzelnen Bändern des Transportbandes am Übergang zugeordnet sind. Die Lichttaster bestimmen den Abstandsschwellwert zwischen den einzelnen Artikeln auf den einzelnen Bändern, bzw. den einzelnen Gassen des Transportbandes der Verpackungsmaschine.

Merkmale vorteilhafter Weiterbildungen der Erfindung ergeben sich aus den jeweiligen abhängigen Ansprüchen.

Im Folgenden sollen Ausführungsbeispiele die erfindungsgemäße Vorrichtung und deren Vorteile anhand der beigefügten Figuren näher erläutern.

Figur 1 zeigt eine Draufsicht auf die Vorrichtung, mit der einer Verpackungsmaschine geordnet Artikel zuführbar sind.

Figur 2 zeigt eine schematische Ansicht der Anordnung einer Detektionseinrichtung zur Ermittlung des Abstandsschwellwerts zwischen einzelnen Artikeln.

Figur 3 zeigt eine Teilansicht der Vorrichtung, welche in Figur 1 mit dem gestrichelten Kreis gekennzeichnet ist.

Figur 4 zeigt eine Seitenansicht der erfindungsgemäßen Vorrichtung.

Figur 5 zeigt eine vergrößerte perspektivische Ansicht des in Figur 4 mit einem gestrichelten Kreis gekennzeichneten Bereichs.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann. Dies stellt keine abschließende Beschränkung der Erfindung dar.

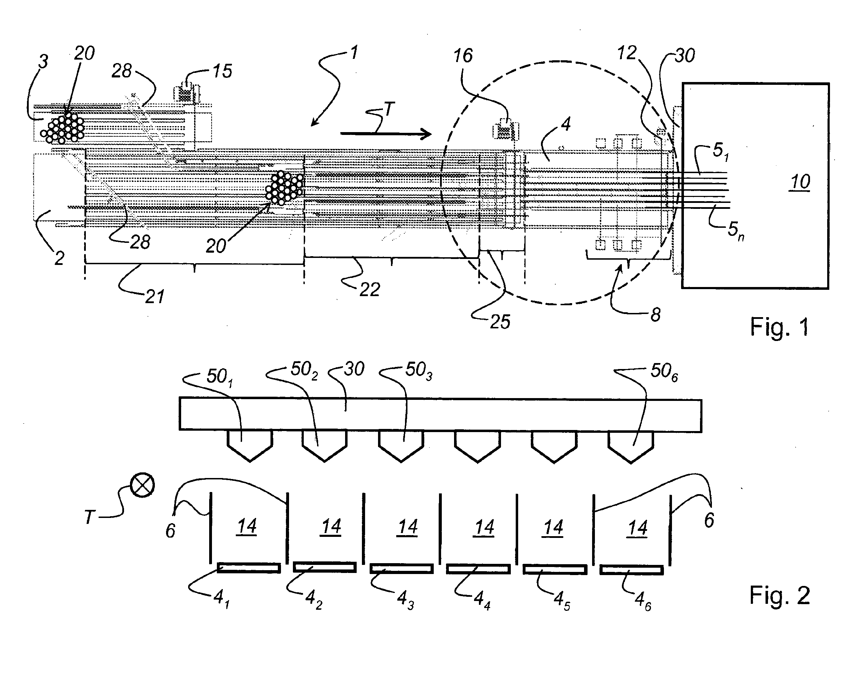

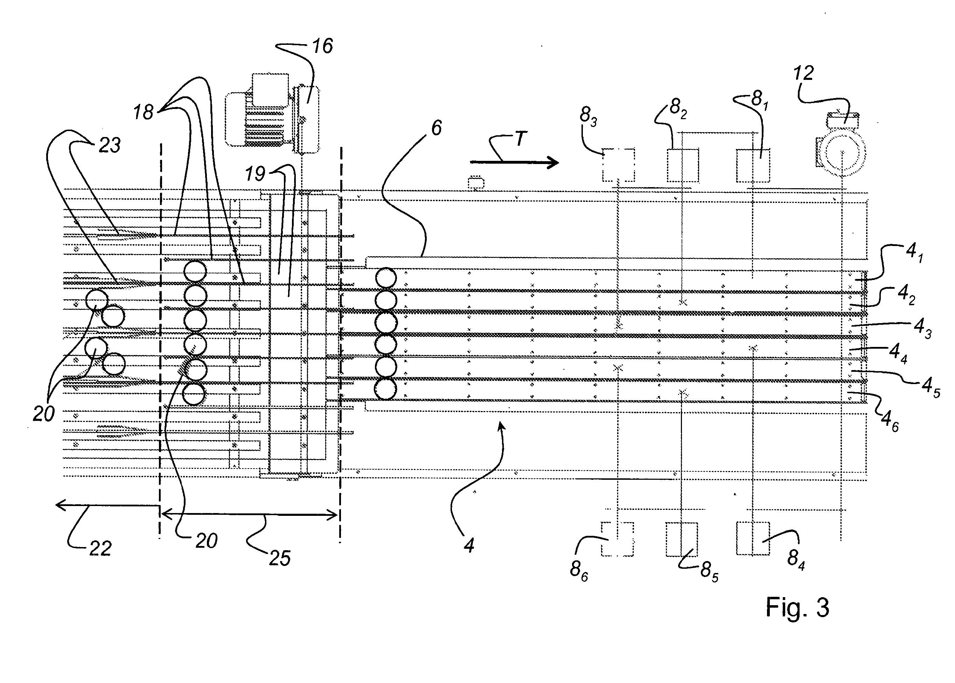

Figur 1 zeigt eine Draufsicht auf die erfindungsgemäße Vorrichtung. Bei der in Figur 1 gezeigten Ausführungsform ist einer Verpackungsmaschine 10 ein Transportband 4 vorgeschaltet, das aus mehreren Einzelbändern 4₁, 4₂, ..., 4ₙ, besteht. Die einzelnen Bänder 4₁, 4₂, ..., 4ₙ sind durch Trennwände 6 (siehe Figur 2 und 3) voneinander räumlich getrennt. Durch diese Trennwände 6 entstehen mehrere Gassen 14, in denen die Artikel 20 einzeln transportiert und der Verpackungsmaschine 10 zugeführt werden. Dem Transportband 4 ist ein Dosierband 2 vorgeschaltet. Das Dosierband 2 besteht aus einem ersten Teilabschnitt 21 und einem zweiten Teilabschnitt 22. Das gesamte Dosierband 2 ist mit einem einzigen Antriebsmotor 16 verbunden, der das Dosierband 2 mit einer kontinuierlichen Geschwindigkeit antreibt. Das Dosierband 2 ist als Mattenförderer ausgestaltet. In dem ersten Teilabschnitt 21 des Dosierbandes 2 werden die ankommenden Artikel in einem Massenstrom transportiert. Die im Massenstrom ankommenden Artikel 20 sind in Form einer Kugelpackung angeordnet. Unter Kugelpackung ist eine dichte Packung von Artikel zu verstehen. Dies wird in der Regel als Hexagonal-Closepack verstanden. Dem Dosierband 2 ist ferner ein weiteres Transportband 3 vorgeschaltet, das ebenfalls über einen Antriebsmotor 15 mit konstanter Geschwindigkeit betreibbar ist. Über ein Führungssystem 28 werden die Artikel im Massenstrom vom Transportband 3 auf das Transportband 2 übergeleitet. In der in Figur 1 gezeigten Ausführungsform ist das Transportband 3 seitlich am Dosierband 2 angeordnet. Das Transportband 4, welches der Verpackungsmaschine vorgeordnet ist, ist ebenfalls mit einem einzigen Antriebsmotor 12 antreibbar. Der Antriebsmotor 12 ist mit einem Getriebe 8 oder einem Kupplungssystem versehen. Die nachfolgende Beschreibung beschränkt sich auf die Verwendung eines Kupplungssystems. Dies soll jedoch nicht als eine Beschränkung der Erfindung aufgefasst werden. Die einzelnen Bänder 4₁, 4₂, ..., 4ₙ des Transportbandes 4 sind jeweils mit einer Kupplung 8₁, 8₂, ..., 8ₙ verbunden. Über diese Kupplungen kann die Geschwindigkeit eines jeden Bandes 4₁, 4₂, ..., 4ₙ des Transportbandes 4 individuell, in Stufen, erhöht werden. An einem Ende 25 des Dosierbandes 2, welches dem Transportband 4 vorgeordnet ist, sind ebenfalls mehrere Trennwände 18 (siehe Figur 3) vorgesehen, die mehrere Gassenabschnitte 19 ausbilden. Diese Gassenabschnitte 19 fluchten mit den Gassen 14 des Transportbandes 4. Ebenso sind in der Verpackungsmaschine 10 individuelle Transportbänder 5₁, 5₂, ..., 5ₙ ausgebildet, die ebenfalls mit den Bändern 4₁, 4₂, ..., 4ₙ des Transportbandes 4 fluchten. Die Transportrichtung T der Vorrichtung ist in Figur 1 mit einem Pfeil wiedergegeben. An einem Übergang von Transportband 4 in die Verpackungsmaschine 10 ist eine Detektoreinrichtung 30 vorgesehen. Am Übergang vom Transportband 3 auf das Dosierband 2 sind zum Führen der Artikel mehrere Geländer 28 angebracht. Kupplungen einen Freilauf haben. Die einzelnen Bänder 4₁, 4₂, ..., 4ₙ des Transportbandes 4 sind grundsätzlich alle mit einer gleichen Geschwindigkeit anteibbar. Dabei befinden sich die den einzelnen Bändern 4₁, 4₂, ..., 4ₙ zugeordneten Kupplungen 8₁, 8₂, ..., 8ₙ in einem Freilauf. Erst bei der Notwendigkeit zum Aufschließen vorhandener Lücken zwischen den Artikeln 20 den einzelnen Bändern 4₁, 4₂, ..., 4ₙ, wird die jeweilige Kupplung aktiviert und somit das entsprechende Band 4₁, 4₂, ..., 4ₙ mit einer erhöhten Geschwindigkeit betrieben, um die Lücke oder auch den Staudruck der Artikel zu regeln.

In Figur 2 ist schematisch die Zuordnung der Detektoreinrichtung 30 zu dem Transportband 4 dargestellt. Sowohl in der nachfolgenden Beschreibung hat das Transportband 4 sechs Gassen ausgebildet. Dies soll nicht als eine Beschränkung der Erfindung aufgefasst werden. Es ist für einen Fachmann selbstverständlich, dass je nach zu verpackenden Artikeln, bzw. nach Größe des zu verpackenden Artikels die Gassenzahl, bzw. die Gassenbreite entsprechend an dem Artikel anpassbar ist. In der in Figur 2 gezeigten Darstellung ist die Transportrichtung T in die gleiche Ebene hinein gerichtet. Die Detektoreinrichtung erstreckt sich quer über das Transportband 4, bzw. über die einzelnen Bänder 5₁, 5₂, ..., 5ₙ der Verpackungsmaschine 10. Wo letztendlich die Detektoreinrichtung 30 genau angeordnet ist, hängt von den Gegebenheiten der Vorrichtung 1 ab. Es muss auf alle Fälle sichergestellt sein, dass die Zeit ausreicht, um ab der Detektion eines Abstandsschwellwerts das Transportband 4, bzw. das jeweilige Band 4₁, 4₂, ..., 4ₙ des Transportbandes 4 derart schnell zu bewegen, dass der gewünschte Abstand zwischen den einzelnen Artikeln 20 in der Verpackungsmaschine 10 wieder erreicht ist. Die Detektoreinrichtung 30 ist mit Lichttastern 50₁, 50₂, ..., 50ₙ versehen, die in den einzelnen Gassen 14 des Transportbandes 4 den Abstandsschwellwert bestimmen. Anhand der Bestimmung des Abstandsschwellwerts werden die Kupplungen 8₁, 8₂, ..., 8ₙ des Transportbandes 4 entsprechend gesteuert, so dass dem jeweiligen Band 4₁, 4₂, ..., 4ₙ, die erforderliche erhöhte Geschwindigkeit zuweisbar ist (siehe hierzu Figur 3).

Figur 3 zeigt eine vergrößerte Draufsicht des in Figur 1 mit dem gestrichelten Kreis gekennzeichneten Bereichs. Dem Transportband 4 ist ein einziger Antriebsmotor 12 zugeordnet. Die Geschwindigkeit der einzelnen Bänder 4₁, 4₂, ..., 4ₙ des Transportbandes 4 sind über entsprechende Kupplungen 8₁, 8₂, ..., 8ₙ einstellbar. Ist die entsprechende Kupplung 8₁, 8₂, ..., 8ₙ geschalten, so ist die Geschwindigkeit des jeweiligen Bandes 4₁, 4₂, ..., 4ₙ gegenüber einem nachgeschalteten Band 5₁, 5₂, ... 5ₙ des Transportbandes der Verpackungsmaschine 10 erhöht. Die einzelnen Bänder 4₁, 4₂, ..., 4ₙ des Transportbandes 4 sind durch Trennwände 6 voneinander räumlich getrennt. Somit entstehen Gassen 14, in denen die Artikel 20 vereinzelt transportierbar sind. Am Ende 25 des Dosierbandes 2, welches dem Transportband 4 gegenüberliegt, sind entsprechend Gassenabschnitte 19 ausgebildet, die mit den Gassen 14 des Transportbandes 4 fluchten. In den Gassenabschnitten 19 des Dosierbandes 2 liegen die Artikel 20 bereits vereinzelt vor. Dem Ende 25 des Dosierbandes 2 ist ein zweiter Teilabschnitt 22 vorgeschaltet, in dem mehrere Separierelemente 23 vorgesehen sind, die den Massenstrom auf dem Dosierband 2 in einzelne Gruppen von Artikeln 20 aufspalten. Somit liegen in den Gassenabschnitten 19 des Dosierbandes 2 die Artikel 20 vereinzelt vor.

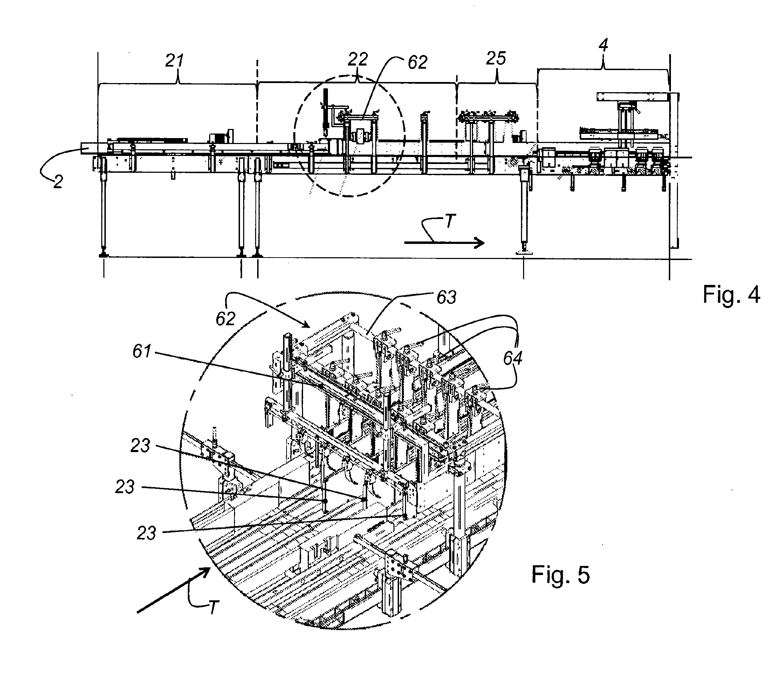

Figur 4 zeigt eine Seitenansicht der erfindungsgemäßen Vorrichtung. Die Transportrichtung T der Artikel 20 ist in Figur 4 mit einem Pfeil dargestellt. Wie bereits in der vorangehenden Beschreibung erwähnt, ist das Dosierband 2 in einen ersten Teilabschnitt 21, einen zweiten Teilabschnitt 22 und einem Ende 25 unterteilt. Dem Ende 25 des Dosierbandes 2 folgt das Transportband 4, welches letztendlich die Artikel 20 in die Verpackungsmaschine 10 übergibt. Wie in der in Figur 1 gezeigten Darstellung wiedergegeben ist, sind in der Verpackungsmaschine 10 ebenfalls einzelne Bänder 5₁, 5₂, ..., 5ₙ ausgebildet, die die einzelnen Artikel 20 zur weiteren Verarbeitung der Verpackungsmaschine in einer entsprechend vorgegebenen Ordnung zuführen. Im zweiten Teilabschnitt 22 des Dosierbandes 2 ist ein Verstellsystem 62 für die Separierelemente 23 vorgesehen. Ebenso ist im Ende 25 des Dosierbandes ein weiteres Verstellsystem 65 vorgesehen. Mit dem Verstellsystem 62 können die Separierelemente 23 an die unterschiedlichen Artikeltypen (Größe, Form) angepasst werden. Gleiches ist mit dem Verstellsystem 65 am Ende 25 des Dosierbandes 2 möglich. Hier können die einzelnen Trennwände 18 der Gassenabschnitte 19 an die unterschiedlichen Artikeltypen angepasst werden. Ferner ist das Transportband 4 mit einem Verstellsystem (nicht dargestellt) verbunden, das die Trennwände 14 verstellbar macht, um auch hier ebenfalls eine Anpassung der einzelnen Gassen 14 an die unterschiedlichen Artikeltypen zu ermöglichen.

Figur 5 zeigt eine vergrößerte Darstellung des in Figur 4 mit dem gestrichelten Kreis gekennzeichneten Bereichs. Hier ist im Wesentlichen eine perspektivische Ansicht des Verstellsystems 62 für die Separierelemente 23 gezeigt. Die Artikel 20 werden in Transportrichtung T auf dem Dosierband 2 transportiert. Im zweiten Bereich 22 treffen die Artikel im Massenstrom auf die Separierelemente 23, welche im Wesentlichen als Wände, bzw. Barrieren dargestellt sind. Somit kann der kompakte Massenstrom in einzelne Gruppen aufgebrochen werden. Die einzelnen Separierelemente 23 sind verstellbar, dies ist durch entsprechende Schienen 61, 63 möglich, die über den Separierelementen 23 angeordnet sind. In der in Figur 5 gezeigten Ausführungsform sind die Verstellelemente 64 auf den einzelnen Schienen 61 klemmbar. In einer anderen Ausführungsform ist es ebenfalls vorstellbar, dass diese Verstellung der Separierelemente, bzw. auch der Trennwände 18 der Gassenabschnitte 19, bzw. der Trennwände 6 der Gassen 14 des Transportbandes 4 motorisch verstellt werden können, so dass damit eine schnelle Anpassung an die unterschiedlichen Artikeltypen, bzw. Artikelgrößen möglich ist, die mit der Vorrichtung 1 verarbeitet werden sollen. Die mit der Vorrichtung 1 verarbeitbaren Artikel können Flaschen, Dosen, Weichpackungen, etc. sein.

Die Erfindung wurde unter Bezugnahme auf eine bevorzugte Ausführungsform beschrieben. Es ist jedoch für einen Fachmann selbstverständlich, dass Abwandlungen und/oder Änderungen gemacht werden können, ohne dabei den Schutzbereich der nachstehenden Ansprüche zu verlassen.

## Patentansprüche

1. Vorrichtung (1) zum Zuführen von Artikeln (20) zu einer Verpackungsmaschine (10), mit einem Dosierband (2) und einem zwischen dem Dosierband (2) und der Verpackungsmaschine (10) angeordneten Transportband (4), das aus mindestens zwei einzelnen parallelen Bändern (41, 42,...,4n) aufgebaut ist, wobei die Bänder (41, 42,...,4n) durch parallele Trennwände (6) voneinander räumlich getrennt sind, wodurch mehrere Gassen (14) für den Transport der Artikel (20) entstehen, die mit mehreren Gassenabschnitten (19) des Dosierbandes (2) fluchten, **dadurch gekennzeichnet, dass** dem Dosierband (2) ein einziger Antriebsmotor (16) zugeordnet ist, der das gesamte Dosierband (2) mit einer einheitlichen Geschwindigkeit antreibt, und dass dem Transportband (4) ein einziger Antriebsmotor (12) zugeordnet ist, der mit einer Schalteinrichtung (8) verbunden ist, damit die einzelnen Bänder (41, 42,...,4n) des Transportbandes (4) mit unterschiedlichen Geschwindigkeiten beaufschlagbar sind.

2. Vorrichtung nach Anspruch 1, **dadurch gekennzeichnet, dass** die Schalteinrichtung (8) ein Schaltgetriebe ist.

3. Vorrichtung nach Anspruch 1, **dadurch gekennzeichnet, dass** die Schalteinrichtung (8) ein Kupplungssystem umfasst.

4. Vorrichtung nach Anspruch 1, **dadurch gekennzeichnet, dass** dem Dosierband (2) ein weiteres Transportband (3) vorgeordnet ist, das dem Dosierband (2) die Artikel (20) im Massenstrom zuführt, wobei das weitere Transportband (3) ebenfalls über einen einzigen Antriebsmotor (15) antreibbar ist und der Massenstrom auf dem weiteren Transportband (3) und zumindest auf einem ersten Teilabschnitt (21) des Dosierbandes (2) eine Kugelpackung bildet.

5. Vorrichtung nach Anspruch 4, **dadurch gekennzeichnet, dass** in einem zweiten Teilabschnitt (22) des Dosierbandes (2) mehrere Separierelemente (23) vorgesehen sind, die derart angeordnet sind, dass der Massenstrom der Artikel (20) in einzelne Gruppen von Artikeln (20) aufgespalten ist.

6. Vorrichtung nach Anspruch 5, **dadurch gekennzeichnet, dass** an einem Ende (25) des Dosierbandes (2), welches dem nachgeordneten Transportband (4) gegenüberliegt, ebenfalls mehrere Trennwände (18) vorgesehen sind und somit auf dem Dosierband (2) mehrere Gassenabschnitte (19) ausbilden, die mit den Gassen (14) des Transportbandes (4) fluchten, und wobei die Artikel (20) in den Gassenabschnitten (19) vereinzelt vorliegen.

7. Vorrichtung nach einem der Ansprüche 1 bis 6, **dadurch gekennzeichnet, dass** jedem einzelnen Band (4₁, 4₂,...,4ₙ) des Transportbandes (4) eine Kupplung (8₁, 8₂,...,8ₙ) des Kupplungssystems zugeordnet ist, mit der durch Hinzuschalten der jeweiligen Kupplung (8₁, 8₂,...,8ₙ) individuell die Geschwindigkeit eines jeden einzelnen Bandes (4₁, 4₂,...,4ₙ) des Transportbandes (4) veränderbar ist.

8. Vorrichtung nach einem der Ansprüche 1 bis 7, **dadurch gekennzeichnet, dass** dem Transportband (4) ebenfalls ein Transportband (5) in der Verpackungsmaschine (10) mit Gassen nachgeordnet ist, die ebenfalls mit den Gassen des Transportbandes (4) fluchten und wobei das Transportband (5) der Verpackungsmaschine (10) mit einem Antriebsmotor versehen ist, mit dem das Transportband (5) der Verpackungsmaschine (10) mit einer konstanten Geschwindigkeit bewegbar ist.

9. Vorrichtung nach einem der Ansprüche 1 bis 8, **dadurch gekennzeichnet, dass** einem Übergang (32) vom Transportband (4) zum Transportband (5) der Verpackungsmaschine (10) mindestens eine Detektionseinrichtung (30) zugeordnet ist, die einen Anstandsschwellwert der einzelnen Artikel auf den einzelnen Bändern (4₁, 4₂,...,4ₙ) des Transportbandes (4) am Übergang ermittelt und die Kupplung bei demjenigen Band (4₁, 4₂,....4ₙ) zuschaltbar ist, bei dem der Abstandsschwellwert eine vorgegebene Grenze überschreitet, so dass dasjenige Band (4₁, 4₂,...,4ₙ) des Transportbandes (4) schneller bewegbar ist als das entsprechende Band (5₁, 5₂,...,5ₙ) des Transportbandes (5) der Verpackungsmaschine (10).

10. Vorrichtung nach Anspruch 9, **dadurch gekennzeichnet, dass** die Detektionseinrichtung (30) mehrere Lichttaster (50₁, 50₂,...,50ₙ) umfasst, die den einzelnen Bändern (5₁, 5₂,...,5ₙ) des Transportbandes (5) der Verpackungsmaschine (10) zugeordnet sind, mit denen der Abstandsschwellwert zwischen einzelnen Artikeln auf den einzelnen Bändern (5₁, 5₂,...,5ₙ) des Transportbandes (5) der Verpackungsmaschine (10) bestimmbar sind.

## Claims

1. Apparatus (1) for feeding articles (20) to a packaging machine (10), comprising a dosing belt (2) and a conveyor belt (4) arranged between the dosing belt (2) and the packaging machine (10), said conveyor belt (4) consisting of at least two individual parallel belts (4₁, 4₂, ..., 4ₙ), wherein the belts (4₁, 4₂, ..., 4ₙ) are spatially separated from each other by parallel partition walls (6), by means of which several lanes (14) for the transport of the articles (20) are created, which are aligned with several lane sections (19) of the dosing belt (2), **characterized in that** the dosing belt (2) is associated with a single drive motor (16), which drives the entire dosing belt (2) at a uniform speed, and the conveyor belt (4) is associated with a single drive motor (12), which is connected to a switching device (8) so that the individual belts (4₁, 4₂, ..., 4ₙ) of the conveyor belt (4) can be moved with different speeds.

2. Apparatus according to claim 1, **characterized in that** the switching device (8) is a control gear.

3. Apparatus according to claim 1, **characterized in that** the switching device (8) comprises a coupling system.

4. Apparatus according to claim 1, **characterized in that** a further conveyor belt (3) is arranged upstream of the dosing belt (2), said further conveyor belt (3) transporting the articles (20) in a mass flow to the dosing belt (2), wherein the further conveyor belt (3) can also be driven by a single drive motor (15) and the mass flow forms a spherical packaging on the further conveyor belt (3) and at least on a first section (21) of the dosing belt (2).

5. Apparatus according to claim 4, **characterized in that** several separating elements (23) are provided in a second section (22) of the dosing belt (2), which separating elements (23) are arranged so as to split the mass flow of articles (20) into individual groups of articles (20).

6. Apparatus according to claim 5, **characterized in that** several partition walls (18) are also provided at an end (25) of the dosing belt (2), which is opposite of the downstream conveyor belt (4), and thus form multiple lane sections (19) on the dosing belt (2), which are aligned with the lanes (14) of the conveyor belt (4), and wherein the articles (20) in the lane sections (19) are separately presented.

7. Apparatus according to one of the claims 1 to 6, **characterized in that** a coupling (8₁, 8₂, ..., 8ₙ) of the coupling system is associated with each individual belt (4₁, 4₂, ..., 4ₙ) of the conveyor belt (4), by means of which the speed of each individual belt (4₁, 4₂, ..., 4ₙ) of the conveyor belt (4) can be varied individually by activating the respective coupling (8₁, 8₂, ..., 8ₙ).

8. Apparatus according to one of the claims 1 to 7, **characterized in that** a conveyor belt (5) with lanes is arranged downstream of the conveyor belt (4) in the packaging machine (10), which lanes are also aligned with the lanes of the conveyor belt (4), and wherein the conveyor belt (5) of the packaging machine (10) is provided with a drive motor, with which the conveyor belt (5) of the packaging machine (10) can be driven at a constant speed.

9. Apparatus according to one of the claims 1 to 8, **characterized in that** at least one detection device (30) is assigned to a transition area (32) from the conveyor belt (4) to the conveyor belt (5) of the packaging machine (10), which detection device (30) determines a distance threshold of the individual articles on the individual belts (4₁, 4₂, ..., 4ₙ) of the conveyor belt (4) at the transition area, and the coupling can be activated in the one belt (4₁, 4₂, ..., 4ₙ) in which the distance threshold exceeds a predetermined limit, so that the respective one belt (4₁, 4₂, ..., 4ₙ) of the conveyor belt (4) can be moved faster than the corresponding belt (5₁, 5₂, ..., 5ₙ) of the conveyor belt (5) of the packaging machine (10).

10. Apparatus according to claim 9, **characterized in that** the detection device (30) comprises a number of light sensors (50₁, 50₂, ..., 50ₙ) assigned to the individual belts (5₁, 5₂, ..., 5ₙ) of the conveyor belt (5) of the packaging machine (10), by means of which the distance threshold between the individual articles on the individual belts (5₁, 5_{2,} ..., 5ₙ) of the conveyor belt (5) of the packaging machine (10) can be determined.

## Revendications

1. Dispositif (1) pour amener des articles (20) vers une machine d'emballage (10), avec une bande doseuse (2) et une bande transporteuse (4) disposée entre la bande doseuse (2) et la machine d'emballage (10), la bande transporteuse (4) est composée d'au moins deux bandes (4₁, 4₂, ..., 4ₙ) parallèles, lesquelles bandes (4₁, 4₂, ..., 4ₙ) sont séparées dans l'espace les unes des autres par des cloisons (6) parallèles de façon à former que plusieurs allées (14) pour le transport des articles (20) qui sont alignées avec plusieurs sections d'allée (19) de la bande doseuse (2), **caractérisé en ce que** la bande doseuse (2) est associée à un seul moteur d'entraînement (16) qui entraîne la bande doseuse (2) entière à une vitesse uniforme, et **en ce que** la bande transporteuse (4) est associée à un seul moteur d'entraînement (12) qui est relié à un dispositif de commutation (8) afin que les différentes bandes (4₁, 4₂, ..., 4ₙ) de la bande transporteuse (4) puissent être soumises à des vitesses différentes.

2. Dispositif selon la revendication 1, **caractérisé en ce que** le dispositif de commutation (8) est un engrenage de changement de rapport (transmission à changement de vitesse).

3. Dispositif selon la revendication 1, **caractérisé en ce que** le dispositif de commutation (8) comprend un système d'embrayage.

4. Dispositif selon la revendication 1, **caractérisé en ce que** la bande doseuse (2) fait suite à une autre bande transporteuse (3) qui amène les articles (20) dans un flux en masse à la bande doseuse (2), l'autre bande transporteuse (3) pouvant elle aussi être entraînée par un seul moteur d'entraînement (15) et le flux en masse formant un empilement de balles sur l'autre bande transporteuse (3) et sur au moins un premier tronçon (21) de la bande doseuse (2).

5. Dispositif selon la revendication 4, **caractérisé en ce que** sont prévus dans un deuxième tronçon (22) de la bande doseuse (2) plusieurs éléments de séparation (23) disposés de telle façon que le flux en masse des articles (20) soit fractionné en groupes séparés d'articles (20).

6. Dispositif selon la revendication 5, **caractérisé en ce que** plusieurs cloisons (18) sont également prévues à une extrémité (25) de la bande doseuse (2) qui fait face à la bande transporteuse (4) située en aval et forment ainsi sur la bande doseuse (2) plusieurs sections d'allée (19) qui sont alignées avec les allées (14) de la bande transporteuse (4), et dans lequel les articles (20) se trouvent isolés dans les sections d'allée (19).

7. Dispositif selon l'une des revendications 1 à 6, **caractérisé en ce que** chaque bande (4₁, 4₂, ..., 4ₙ) de la bande transporteuse (4) est associée à un embrayage (8₁, 8₂, ..., 8ₙ) du système d'embrayage qui permet, en faisant intervenir l'embrayage correspondant (8₁, 8₂, ..., 8ₙ) de modifier individuellement la vitesse de chaque bande (4₁, 4₂, ..., 4ₙ) de la bande transporteuse (4).

8. Dispositif selon l'une des revendications 1 à 7, **caractérisé en ce que** la bande transporteuse (4) est elle aussi suivie d'une bande transporteuse (5) dans la machine d'emballage (10) avec des allées qui sont également alignées avec les allées de la bande transporteuse (4) et dans lequel la bande transporteuse (5) de la machine d'emballage (10) est munie d'un moteur d'entraînement avec lequel la bande transporteuse (5) de la machine d'emballage (10) peut être déplacée à une vitesse constante.

9. Dispositif selon l'une des revendications 1 à 8, **caractérisé en ce qu'**une transition (32) de la bande transporteuse (4) à la bande transporteuse (5) de la machine d'emballage (10) est associée à au moins un dispositif de détection (30) qui transmet une valeur de seuil de distance des différents articles sur les différentes bandes (4₁, 4₂, ..., 4ₙ) de la bande de transport (4) au niveau de la transition et l'embrayage peut être mis en action pour la bande (4₁, 4₂, ..., 4ₙ) pour laquelle la valeur de seuil de distance dépasse une limite prédéterminée, de sorte que cette bande (4₁, 4₂, ..., 4ₙ) de la bande transporteuse (4) peut être déplacée plus vite que la bande correspondante (5₁, 5₂, ..., 5ₙ) de la bande transporteuse (5) de la machine d'emballage (10).

10. Dispositif selon la revendication 9, **caractérisé en ce que** le dispositif de détection (30) comprend plusieurs détecteurs photoélectriques (50₁, 50₂, ..., 50ₙ) associés aux différentes bandes (5₁, 5₂, ..., 5ₙ) de la bande transporteuse (5) de la machine d'emballage (10), avec lesquels la valeur de seuil de distance entre les différents articles sur les différentes bandes (5₁, 5₂, ..., 5ₙ) de la bande transporteuse (5) de la machine d'emballage (10) peut être déterminée.
